# EUROPÄISCHE PATENTSCHRIFT

(11) **EP 0 809 554 B1**
(45) Veröffentlichungstag und Bekanntmachung des Hinweises auf die Patenterteilung: **19.08.1998**
(21) Anmeldenummer: 95924160.5
(22) Anmeldetag: 28.06.1995
(51) Int. Cl.: B22D 1/00, B28B 7/18, C04B 38/06

(54) **GASSPÜLSTEIN IN FORM EINES FUGENSPÜLERS**
PERMEABLE PLUG CONSISTING OF A JOINT PURGE BRICK
BRIQUE DE RINCAGE A PASSAGES DU TYPE "JOINT"

(30) Priorität: 15.02.1995 DE 19504941
(43) Veröffentlichungstag der Anmeldung: 03.12.1997
(73) Patentinhaber: Knöllinger, Horst, D-56203 Höhr-Grenzhausen (DE)
(72) Erfinder: WANDSCHNEIDER, Peter, D-56332 Alken (DE)
(74) Vertreter: Patentanwälte Lippert, Stachow, Schmidt & Partner
(86) Internationale Anmeldenummer: DE9500848
(87) Internationale Veröffentlichungsnummer: WO9625259

(56) Entgegenhaltungen:
- EP-A- 0 221 250
- DE-A- 3 823 897
- DE-C- 3 831 726
- DE-U- 8 700 662

## Beschreibung

Die Erfindung betrifft einen Gasspülstein für metallurgische Gefäße, mit einem Feuerfestformteil, in dem mindestens ein Gasdurchtrittskanal in Form einer Fuge vorgesehen ist, die es von der Kalt- zur Heißseite durchzieht.

Gattungsgemäße Gasspülsteine werden als sogenannte Fugenspüler bezeichnet und dienen zum Einblasen von Reaktions- oder Reinigungsgasen in Metallschmelzen.

In der Regel werden sie dabei in die Feuerfestausmauerung eines metallurgischen Gefäßes, insbesondere einer Stahlpfanne, im Bodenbereich eingesetzt und mittels eines Gaszuführungsrohres mit Druckgas beaufschlagt.

Die bekannten Gasspülsteine bestehen beispielsweise aus einem inneren, konisch ausgebildeten feuerfesten Formteil, über das ein zweites, äußeres, ebenfalls konisch ausgebildetes Formteil gesetzt wird.

Um einen definierten Spalt zwischen dem inneren und äußeren Formteil zu gewährleisten, werden in die entsprechende Fuge z. B. streifenförmige Abstandshalter eingesetzt.

Derartige Steine sind also nicht als Monoblock aufgebaut.

Die seitliche Umfangswandung und der Bodenbereich derartiger Gasspülsteine ist üblicherweise mit einer gasdicht verschweißten Blechumkleidung versehen, dessen Boden zur Unterseite bzw. Kaltseite des Gasspülsteins beabstandet ist und auf diese Weise einen Gaszuführungsraum bildet. Im Bodenblech befindet sich das angeschweißte Gaszuführungsrohr, das im Gaszuführungsraum mündet.

Bei einem weiteren bekannten Gasspülstein ist die Fuge zwischen der seitlichen Blechummantelung und dem Feuerfestformkörper ausgebildet. Diese Gasspülsteine werden jedoch aufgrund eines relativ geringen Verschleißwiderstandes heute in der Regel nicht mehr verwendet.

Aus der DE-OS 43 12 988 ist darüber hinaus ein Gasspülstein bekannt, bei dem die Gasdurchtrittskanäle mit Hilfe einer räumlichen Netzstruktur gebildet werden, die im Inneren des monolithisch abgegossenen feuerfesten Formteils mit Hilfe einer Spannvorrichtung erzeugt werden.

Die Herstellung dieses Gasspülsteins ist jedoch relativ aufwendig, außerdem sind die inneren Gasdurchtrittskanäle relativ lang, so daß vergleichsweise hohe Druckverluste auftreten.

Bei einem weiteren, beispielsweise aus der DE-OS 38 23 897 bekannten Spüler werden ebenfalls mit Hilfe einer Spannvorrichtung Fäden bzw. Bänder in eine Gießform eingesetzt, die nach dem Abbinden des Formteiles herausgezogen oder ausgebrannt werden können. Auch dieses Formteil ist als Monoblock hergestellt, das Spannen der einzelnen Fäden ist jedoch wiederum vergleichsweise aufwendig.

Der Erfindung liegt die Aufgabe zugrunde, einen Gasspülstein zu schaffen, dessen Herstellung vereinfacht ist.

Diese Aufgabe wird dadurch gelöst, daß in der Fuge flächige Brücken aus Feuerfestmaterial vorgesehen sind, die die gegenüberliegenden Fugenwandungen einstückig bzw. monolithisch miteinander verbinden.

Dieser Gasspülstein kann erfindungsgemäß dadurch hergestellt werden, daß ein offener Hohlkörper aus einer ausschmelzbaren oder ausbrennbaren Substanz, dessen Seitenwandung flächige Durchbrüche aufweist, in eine der äußeren Gestalt des Formteiles entsprechende Gießform eingesetzt wird und daß die Seitenwandung des Hohlkörpers unter Auffüllen der Gießform mit einer feuerfesten Gießmasse umgossen wird, wobei die oberen bzw. unteren Wandungsbereiche des Hohlkörpers die Kalt- und/oder Heißseite des Formteiles durchdringen.

Der erfindungsgemäße Gasspüler weist also eine gerichtete Porosität auf, wobei er Merkmale eines Fugenspülers und eines Gasspülsteins mit einzelnen Gasdurchtrittskanälen aufweist. Im Gegensatz zu den bekannten Fugenspülern befinden sich im Inneren der Fuge flächige Brücken aus Feuerfestmaterial, die die gegenüberliegenden Fugenwandungen monolithisch verbinden. Aufgrund der monolithischen Herstellung weist dieser Stein eine hervorragende Haltbarkeit auf, wobei die Menge des in die Schmelze einzudüsenden Gases in einfacher Weise durch die Dicke der Fuge bzw. die Größe und Anzahl der in der Fuge liegenden Brücken in Abhängigkeit vom Betriebsdruck des Spülgases genau eingestellt werden kann.

Durch die flächigen Brücken im Inneren der Fuge können darüber hinaus bereits im Gasspülstein Wirbel hervorgerufen werden, die dazu führen, daß das Gas die Heißseite des Spülers im turbulenten Strömungszustand verläßt und sich auf diese Weise im Inneren der Schmelze fein verteilt.

Dadurch wird nicht nur die Spülwirkung des eingedüsten Gases verbessert, gleichzeitig wird auch verhindert, daß sich im Bereich der Heißseite des Spülers zu hohe Strömungsgeschwindigkeiten ergeben, die anderenfalls zu einem verstärkten Verschleiß des Gasspülsteines führen würden.

Um die Menge von eingedüstem Gas zu erhöhen, können mehrere Fugen vorgesehen sein, die z. B. in konzentrischen Kreisen oder Teilkreisen auf der Heißseite des Spülers münden. Auch läßt sich bei dem erfindungsgemäßen Gasspülstein eine optische Verschleißanzeige in einfacher Weise dadurch verwirklichen, daß z. B. im unteren inneren Bereich des Gasspülsteines eine Fuge ausgebildet ist, die sich zunächst nicht bis zur Heißseite durchzieht, sondern im unteren Bereich endet. Wenn der Gasspülstein bis zu diesem Bereich abgearbeitet ist, ist durch die Kühlwirkung des durch diese Fuge strömenden Gases dann ein innerer dunklerer Bereich zu erkennen, der so den Verschleißzustand des Steines optisch anzeigt. Gasspülsteine mit einer optischen Verschleißanzeige sind z. B. aus der europäischen Patentanmeldung 0 325 709 bekannt.

Wie bereits erwähnt, können die erfindungsgemäßen Gasspülsteine dadurch hergestellt werden, daß ein offener Hohlkörper, beispielsweise aus Kunststoff, in eine entsprechende Gießform eingesetzt wird. Der offene Hohlkörper kann z. B. aus einer konischen Hülse bestehen, deren Seitenwandungen durchbrochen sind. Die Hülse wird auf den Boden der Gießform aufgesetzt, die anschließend ohne weitere Fixierung des Hohlkörpers bis zu dessen oberen Wandungsbereichen vollgegossen werden kann. Die in der Gießform unten liegende Seite bildet später die Heißseite des Spülsteines.

Nach dem Abbinden des Feuerfestmaterials bzw. beim Trocknen wird dann der Kunststoff ausgebrannt oder ausgeschmolzen und hinterläßt die gewünschten Hohlräume, wobei die gegenüberliegenden Wandungen der Fuge durch die flächigen Durchbrüche des Hohlkörpers monolithisch miteinander verbunden sind.

Der Verschleißwiderstand derartiger Spülsteine kann in einfacher Weise dadurch erhöht werden, daß die Fuge und das äußere des Gasspülsteins beispielsweise mit Hilfe von Kohlenstoffträgern imprägniert werden.

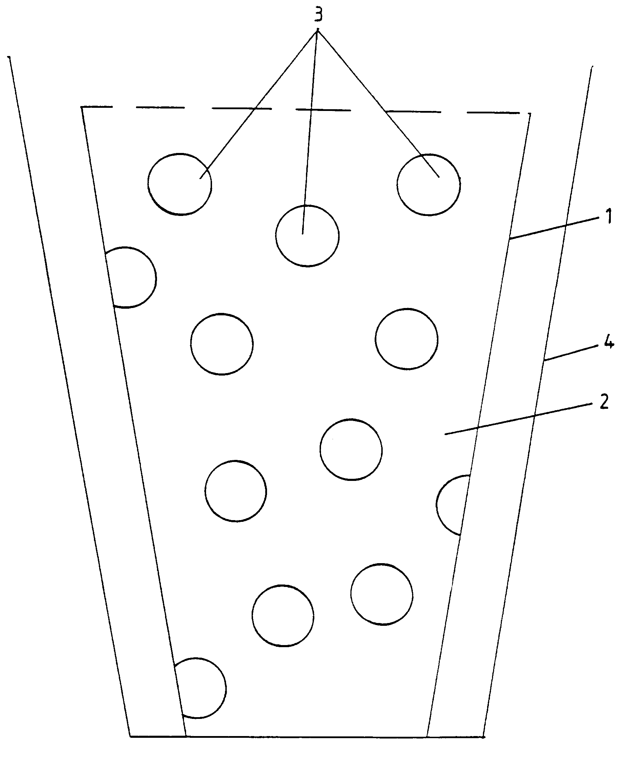

Die Erfindung ist in der Zeichnung beispielsweise veranschaulicht und wird im nachfolgenden anhand der Zeichnung im einzelnen beschrieben.

Die Zeichnungsfigur zeigt die Vorderansicht eines konischen, oben offenen Hohlkörpers 1, auf dessen Seitenwandung 2 eine Vielzahl von etwa kreisförmigen Durchbrüchen vorhanden sind.

Der konische Hohlkörper 1 wird zur Herstellung des Gasspülsteines in eine ebenfalls konische Gießform 4 etwa mittig eingesetzt. Anschließend wird die Gießform mit einer fließfähigen Feuerfestmasse aufgefüllt, wobei die Zuführung der Gießmasse im Inneren und außerhalb des Hohlkörpers 1 erfolgen kann. Die Gießmasse tritt durch die Durchbrüche 3 beim Abgießen durch, so daß sich in den Durchbrüchen 3 entsprechende Brücken bilden, die die gegenüberliegenden Fugenseiten bzw. Gasdurchtrittskanalwandungen gegeneinander abstützen. Die abgegossene Masse kann dabei, wie beim Stand der Technik üblich, vibriert und verdichtet werden.

## Patentansprüche

1. Gasspülstein für metallurgische Gefäße, mit einem feuerfesten Formteil, in dem mindestens ein Gasdurchtrittskanal in Form einer Fuge vorgesehen ist, die es von der Kaltzur Heißseite durchzieht, **dadurch gekennzeichnet**, daß in der Fuge flächige Brücken aus Feuerfestmaterial vorgesehen sind, die die gegenüberliegenden Fugenwandungen einstückig bzw. monolithisch miteinander verbinden.

2. Gasspülstein nach Anspruch 1, **dadurch gekennzeichnet**, daß im Formteilinneren mindestens eine zweite Fuge ausgebildet ist, deren gegenüberliegende Wandungen durch flächige Brücken aus Feuerfestmaterial monolithisch bzw. einstückig miteinander verbunden sind, wobei die Fuge zur Heißseite des Formteiles beabstandet endet.

3. Verfahren zur Herstellung eines Gasspülsteins nach Anspruch 1 oder 2, **dadurch gekennzeichnet**, daß mindestens ein offener Hohlkörper (1) aus einer ausschmelzbaren oder ausbrennbaren Substanz, dessen Seitenwandung (2) flächige Durchbrüche (3) aufweist, in eine der äußeren Gestalt des Formteiles entsprechende Gießform (4) eingesetzt wird und daß die Seitenwandung (2) des Hohlkörpers (1) unter Auffüllung der Gießform (4) mit einer feuerfesten Gießmasse umgossen wird, wobei die oberen bzw. unteren Wandungsbereiche des Hohlkörpers die Kalt- und/oder Heißseite des späteren Formteiles durchdringen.

## Claims

1. Gas-porous plug for metallurgical vessels, comprising a refractory moulding, in which at least one gas passage duct is provided in the form of an interstice running through it from the cold to the hot side, **characterised in that** flat bridges made of refractory material are provided in the interstice, connecting the opposite walls of the interstice in a single piece, i.e. monolithically.

2. Gas-porous plug as per Claim 1, **characterised in that** at least one second interstice is formed in the interior of the moulding, whose opposite walls are connected monolithically, i.e. in a single piece, by flat bridges made of refractory material, where the interstice ends at a distance from the hot side of the moulding.

3. Process for the manufacture of a gas-porous plug as per Claim 1 or 2, **characterised in that** at least one open hollow body (1) made of a substance which can be burnt or melted out, and whose side wall (2) displays flat apertures (3), is inserted into a casting mould (4) corresponding to the outer form of the moulding, and that the side wall (2) of the hollow body (1) is cast-in when the casting mould (4) is filled with a refractory casting compound, the upper and lower wall areas of the hollow body penetrating the cold and/or hot side of the later moulding.

## Revendications

1. Brique de diffusion de gaz pour des cuves métallurgiques, comportant un élément moulé réfractaire, dans lequel au moins un canal de passage de gaz est prévu sous forme d'un joint, qui le traverse de la face froide jusqu'à la face chaude, caractérisée en ce que dans le joint, sont prévus de minces ponts en un matériau réfractaire, qui réunissent l'une à l'autre, en une seule pièce ou de façon monolithe, les parois opposées du joint.

2. Brique de diffusion de gaz selon la revendication 1, caractérisée en ce qu'à l'intérieur de l'élément moulé, est formé au moins un second joint, dont les parois opposées sont réunies l'une à l'autre, de façon monolithe ou en une seule pièce, par de minces ponts en un matériau réfractaire, le joint se terminant alors à distance de la face chaude de l'élément moulé.

3. Procédé pour la fabrication d'une brique de diffusion de gaz selon la revendication 1 ou 2, caractérisé en ce qu'au moins un corps creux ouvert (1) en une substance pouvant être éliminée par fusion ou par combustion, dont la paroi latérale (2) comporte de minces perçages (3), est mis en place dans un moule (4) correspondant à la forme extérieure de l'élément moulé et en ce que la paroi latérale (2) du corps creux (1) est noyée dans une matière de coulée réfractaire par remplissage du moule (4) avec cette dernière, les parties supérieure, respectivement inférieure, de la paroi du corps creux traversant alors la face froide et/ou la face chaude de l'élément moulé ultérieurement obtenu.
